# EUROPÄISCHE PATENTANMELDUNG

(11) **EP 1 102 010 A1**
(43) Veröffentlichungstag der Anmeldung: **23.05.2001**
(21) Anmeldenummer: 00122824.6
(22) Anmeldetag: 20.10.2000
(51) Int. Cl.: F24C 15/32, A21B 3/04

(54) **Ofen mit Dampferzeugungseinrichtung**

(30) Priorität: 20.11.1999 DE 19955911
(71) Anmelder: Wiesheu GmbH, 71563 Affalterbach (DE)
(72) Erfinder: Mohr, Johann, 74078 Heilbronn (DE); Hillmann, Johannes, 89233 Neu-Ulm (DE)
(74) Vertreter: Gahlert, Stefan, Dr.-Ing.

(57) **Zusammenfassung**

Die Erfindung betrifft einen Ofen mit einer Dampferzeugungseinrichtung, die vertikal übereinander angeordnete Verdampferschalen zur Aufnahme von zu verdampfender Flüssigkeit aufweist. Derartige Öfen werden insbesondere in Bäckereien zum Backen tiefgekühlten Backguts verwendet. Von der Dampferzeugungseinrichtung erzeugter Wasserdampf führt zu einer besonders ansprechenden glänzenden Oberfläche des Backguts.

Zur Verbesserung der Dampferzeugung wird ein Ofen vorgeschlagen, bei dessen Dampferzeugungseinrichtung (34a 34b, 40, 60, 70, 80, 90) die Verdampferschalen (44, 50, 74a, 74b, 84) wenigstens teilweise von einem Heizkörper (42, 64, 72, 82, 102) durchsetzt sind. Dadurch steht eine hohe Heizleistung in unmittelbarer Nähe der Verdampferschalen zur Verfügung, so daß sich in kurzer Zeit eine große Dampfmenge erzeugen läßt (Fig. 6).

## Beschreibung

Die Erfindung betrifft einen Ofen, insbesondere einen Backofen, mit einer Dampferzeugungseinrichtung, die übereinander angeordnete Verdampferschalen zur Aufnahme von zu verdampfender Flüssigkeit aufweist.

Ein derartiger Ofen ist aus der EP-B-0 712 578 bekannt.

In Bäckereien werden häufig Backöfen verwendet, die aufgrund ihrer geringen Abmessungen im Verkaufsraum oder in dessen unmittelbarer Nähe aufgestellt sein können. Es hat sich gezeigt, daß das Backgut, z.B. Brötchen oder Brezeln, in derartigen Backöfen eine besonders ansprechende glänzende Oberfläche erhält, wenn es während des Backvorgangs zeitweise Wasserdampf ausgesetzt wird. Eine Dampfbehandlung ist oft auch bei anderen Arten von Öfen vorgesehen, z.B. bei Kombidämpfern, bei denen das Gargut mittels Dampf gegart oder erhitzt wird.

Der aus der vorstehend genannten EP-B-0 712 578 bekannte Backofen weist zur Erzeugung des Wasserdampfes eine Dampferzeugungseinrichtung auf, die im wesentlichen aus einem Gestell besteht, in dem mehrere horizontal verlaufende Ablaufrinnen übereinander befestigt sind. Die Böden der Rinnen sind mit Löchern versehen, durch die senkrecht verlaufende Stäbe angeordnet sind. Der Durchmesser der Stäbe ist geringfügig kleiner als der Durchmesser der Löcher, so daß zwischen den Stäben und den Löchern ein Spalt verbleibt. Dadurch kann Wasser aus einer Ablaufrinne an den Stäben entlang hinunter zur darunterliegenden Ablaufrinne fließen, wodurch die Ablaufrinnen gleichmäßig befeuchtet werden. Die Ablaufrinnen werden einem heißen Luftstrom ausgesetzt, so daß das sich in den befeuchteten Ablaufrinnen befindende Wasser verdampft. Der entstandene Wasserdampf wird vom Luftstrom mitgenommen und gelangt auf diese Weise in den Backraum.

Aufgabe der Erfindung ist es, einen derartigen Ofen weiter zu verbessern.

Gemäß der Erfindung wird diese Aufgabe dadurch gelöst, daß die Verdampferschalen wenigstens teilweise von einem Heizkörper durchsetzt sind.

Die Aufgabe wird auf diese Weise vollkommen gelöst.

Die Erfindung ermöglicht die Bereitstellung einer großen Dampfmenge in kurzer Zeit. Somit wird es ermöglicht, daß die Oberfläche des Backguts besonders glänzend und ansprechend wird, wenn das Backgut zu Beginn des Backvorgangs, also noch vor Erreichen einer Temperatur von 100°C, einer großen Dampfmenge ausgesetzt wird, obwohl nur eine relativ geringe elektrische Anschlußleistung benötigt wird.

Dadurch, daß erfindungsgemäß die Verdampferschalen wenigstens teilweise von einem Heizkörper durchsetzt sind, ist sichergestellt, daß eine hohe Heizleistung in unmittelbarer Nähe der Verdampferschalen zur Verfügung steht. Die Verdampferschalen können auf diese Weise Temperaturen erreichen, die deutlich über der Temperatur der umströmenden Luft liegen. So lassen sich beispielsweise bei Öfen, deren Lufttemperatur zwischen etwa 150° C und 250° C liegt, gemäß der Erfindung die Verdampferschalen mit Hilfe des Heizkörpers ohne weiteres auf weit über 300 °C aufheizen. Bei den bekannten Verdampfungsvorrichtungen hingegen werden die Verdampferschalen von der umströmenden Luft erwärmt, so daß die Temperatur der Verdampferschalen nicht über die der Luft hinausgehen kann.

Bei dem erfindungsgemäßen Ofen ist infolge der hohen Temperatur der Verdampferschalen auch die darin enthaltene Wärmemenge entsprechend groß. Die aufgeheizten Verdampferschalen vermögen somit auch bei noch niedrigen Lufttemperaturen eine große Flüssigkeitsmenge in kurzer Zeit in Dampf umzuwandeln, was im Ergebnis zu einer hohen Dampfleistung führt, um ansprechend aussehende Backwaren zu erhalten. Auch nach dem ersten Abkühlen der Verdampferschalen aufgrund der entzogenen Verdampfungswärme kann weiterhin eine große Dampfmenge erzeugt werden, da sich mit Hilfe des unmittelbar in der Nähe angeordneten Heizkörpers den Verdampferschalen eine wesentlich größere Wärmemenge zuführen läßt, als dies mit umströmender Luft möglich ist.

Die Gestalt der Verdampferschalen ist in weiten Grenzen beliebig. Die Verdampferschalen sollen lediglich eine Art von Einfassung aufweisen, damit Flüssigkeit nicht unkontrolliert, etwa aufgrund einer leicht geneigten Aufstellung des Ofens, abfließt. Der Boden der Verdampferschalen kann eben oder gekrümmt sein. Der Umriß der Bodenfläche kann ebenfalls weitgehend beliebige Formen haben. Auch hinsichtlich der Form und Ausführung des Heizkörpers gibt es keine wesentlichen Einschränkungen. Der Heizkörper sollte lediglich in der Lage sein, durch Zufuhr von Energie eine höhere Temperatur als die umgebende Luft zu erreichen.

Die Anzahl und Dimensionierung der Verdampferschalen sowie die Heizleistung und Anordnung des oder der Heizkörper hängt maßgeblich von der Dampfmenge ab, die pro Zeiteinheit von der Verdampfungsvorrichtung erzeugbar sein soll. Die entsprechenden Parameter sind vorzugsweise so auszulegen, daß einerseits sämtliche Verdampferschalen zur Dampferzeugung beitragen, d.h. zumindest zeitweise mit Flüssigkeit gefüllt oder benetzt sind, und andererseits keine Flüssigkeit unverdampft zurückbleibt bzw. in den Ofenraum läuft.

Die Verdampferschalen können deckungsgleich übereinander angeordnet oder auch teilweise oder vollkommen zueinander versetzt übereinander angeordnet sein. Da die Verdampferschalen meist an der Rückwand oder entlang einer der Seitenwände des Ofens angeordnet sein werden, wird es aufgrund des knappen zur Verfügung stehenden Raumes in der Regel vorzuziehen sein, sie sich zumindest teilweise in der Vertikalen überlappen zu lassen.

Bei einer bevorzugten Ausführung der Erfindung sind die Verdampferschalen jeweils mit wenigstens einer Öffnung versehen, durch die der Heizkörper hindurchgeführt ist. Der Heizkörper durchsetzt somit die Verdampferschalen vollständig. Auf diese Weise ist ein besonders guter Wärmeübergang vom Heizkörper auf die Verdampferschalen gewährleistet. Gleichfalls kann der Heizkörper zur Befestigung der Verdampferschalen dienen.

Vorzugsweise handelt es sich bei dem Heizkörper um ein elektrisch beheizbares Heizrohr. Auf diese Weise läßt sich die gewünschte Heizleistung besonders einfach einstellen. Grundsätzlich möglich sind auch Heizkörper, die von einem Heizmittel durchflossen werden. Bei dem Heizmittel könnte es sich beispielsweise um Öl handeln, jedoch ist eine solche Ausführung zur Behandlung von Lebensmitteln nur bedingt geeignet.

Bei einer bevorzugten Ausführung der Erfindung ist der Heizkörper unabhängig von einer Ofenheizung erwärmbar. Die Verdampferschalen lassen sich auf diese Weise bis auf ihre vorgesehene Endtemperatur aufheizen, während die Lufttemperatur im Backraum, beispielsweise zu Beginn des Backvorgangs oder beim Auftauen tiefgefrorenen Backguts, noch niedrig sein kann. Der Ofenbetrieb kann so ausgelegt sein, daß der Heizkörper ständig mit konstanter Heizleistung Wärme erzeugt und somit die Verdampferschalen ständig ausreichend hoch erhitzt. Die Ofenheizung wird dann unabhängig davon zur Erzeugung des gewünschten Wärmebehandlungsprofils genutzt. Eine solche Betriebsweise hat den Vorteil, daß keine Modifikationen hinsichtlich der Temperaturregelung des Ofens erforderlich ist, da die Ofenheizung üblicherweise ohnehin temperaturgeregelt ist.

Bei einer weiteren vorteilhaften Ausgestaltung berührt der Heizkörper die Verdampferschalen zur Schaffung eines unmittelbaren Wärmeübergangs. Die Wärme geht somit nicht nur über Wärmestrahlung und die in der Nähe der Verdampferschalen erwärmte Luft, sondern auch unmittelbar vom Heizkörper auf die Verdampferschalen über. Auf diese Weise lassen sich die Verdampferschalen in sehr kurzer Zeit auf sehr hohe Temperaturen aufheizen.

Bei einer anderen vorteilhaften Ausführung der Erfindung sind die Verdampferschalen so zueinander angeordnet, daß bei Überschreiten eines Flüssigkeitsstandes in einer Verdampferschale Flüssigkeit durch den Einfluß der Schwerkraft in eine darunter angeordnete Verdampferschale fließt. Dadurch genügt es, einige wenige oder auch nur die oberste Verdampferschale mit Flüssigkeit zu füllen, da diese dann selbständig unter dem Einfluß der Schwerkraft nach und nach in die darunter angeordneten Verdampferschalen fließt.

In einer vorteilhaften Weiterbildung sind die Verdampferschalen jeweils mit wenigstens einem Auslaß zum Ablaufen von Flüssigkeit in eine darunter angeordnete Verdampferschale versehen. Ein derartiger Auslaß kann bspw. am tiefsten Punkt der Verdampferschale angeordnet sein. Auf diese Weise entleeren sich die Verdampferschalen sofort, wodurch die Innenflächen der Schale lediglich benetzt bleiben. Soll sich hingegen ein Flüssigkeitsspiegel in der Verdampferschale bilden, so sind die Auslässe entsprechend an einem höheren Punkt anzuordnen. Je nach Form der Verdampferschalen und deren Ausrichtung zueinander kann jedoch auch auf besondere Auslässe verzichtet werden. Die Flüssigkeit fließt dann einfach über den Rand einer Verdampferschale hinweg nach unten in die darunterliegende Verdampferschale.

Bei einer anderen vorteilhaften Ausführung haben die Verdampferschalen ebene Bodenflächen und sind so geneigt angeordnet, daß durch die Neigung der Bodenflächen eine Fließrichtung festgelegt ist. Eine ebene Bodenfläche hat den Vorteil, daß die bei der Verdampfung wirksame Fläche größer ist als etwa bei einer konkav geformten Bodenfläche. Aufgrund der geneigten Anordnung der Verdampferschalen läßt sich außerdem sicherstellen, daß die Flüssigkeit in den Verdampferschalen stets, also auch bei eventuellen Unebenheiten der Stellfläche des Ofens, wie vorgesehen zum Auslaß hin fließt.

Vorzugsweise beträgt die Neigung der Bodenflächen zwischen etwa 1° und etwa 10°. Bei diesen Werten für die Neigung ist einerseits eine für das Verdampfen ausreichend lange Verweildauer der Flüssigkeit in den Verdampferschalen gewährleistet. Andererseits fließt die Flüssigkeit so schnell von einer Verdampferschale in die darunterliegende, daß in genügend kurzer Zeit alle Verdampferschalen in Kontakt mit der Flüssigkeit kommen.

In einer besonders vorteilhaften Weiterbildung sind die Verdampferschalen außerdem abwechselnd zu gegenüberliegenden Seiten hin geneigt angeordnet. Die zu verdampfende Flüssigkeit kann somit zickzackförmig in der Art einer Kaskade von einer Verdampferschale in die andere fließen. Auf diese Weise lassen sich eine Vielzahl von Verdampferschalen weitgehend deckungsgleich übereinander anordnen. Als Heizkörper können einer oder mehrere vertikal angeordnete Heizstäbe vorgesehen sein, die durch entsprechende Öffnungen in den Verdampferschalen hindurchgeführt sind.

Gemäß einer weiteren vorteilhaften Weiterbildung sind die Verdampferschalen abwechselnd um jeweils 180° um ihre Vertikalachse verdreht übereinander stapelbar. Dies erlaubt es, eine Vielzahl von Verdampferschalen selbsttragend ohne ein zusätzliches Tragegestell übereinander anzuordnen. Vorzugsweise ist der Heizkörper bei dieser Weiterbildung durch eine Öffnung in den Verdampferschalen hindurchgeführt und verhindert somit ein Umkippen der übereinander geschichteten Verdampferschalen.

Vorzugsweise weisen bei dieser Weiterbildung die Verdampferschalen eine etwa trapezförmige, von einem umlaufenden Rand eingefaßte Bodenfläche auf, wobei an wenigstens zwei Stellen entlang der kürzeren Parallelseite des Trapezes der Rand unterbrochen und dort jeweils mit einem nach unten weisenden Steg versehen ist. Infolge der Trapezform lassen sich die Verdampferschalen mit ihren kürzeren Parallelseiten in die jeweils darunterliegende Verdampferschale einsetzen, wodurch sehr viele Verdampferschalen auf engem Raum übereinander angeordnet werden können. Die senkrecht oder vorzugsweise schräg nach unten weisenden Stege legen dabei, zusammen mit der Höhe des Randes, die Neigung der Bodenflächen fest. Die Unterbrechungen des Randes dienen als Auslässe für die Flüssigkeit.

In einer weiteren vorteilhaften Ausführung der Erfindung sind in die Verdampferschalen zur Erhöhung der Wärmekapazität Metallteile eingelegt, deren Form an die Form der Verdampferschalen angepaßt ist. Aufgrund der Anpassung der Form geht Wärme von den Verdampferschalen schnell auf die Metallteile über. Die zusätzlich in den Metallteilen gespeicherte Wärme ermöglicht es, in kurzer Zeit eine noch größere Dampfmenge zu erzeugen.

Gemäß einer anderen vorteilhaften Ausführung der Erfindung ist auf einem Niveau oberhalb der obersten Verdampferschale ein Flüssigkeitsbehälter angeordnet, aus dem zumindest der obersten Verdampferschale Flüssigkeit gezielt zuführbar ist. Ein derartiger Flüssigkeitsbehälter hat den Vorteil, daß sich die zuzuführende Flüssigkeit gut dosieren und gegebenenfalls mit Zusätzen versehen läßt. Außerdem kann die Flüssigkeit im Flüssigkeitsbehälter vorab erwärmt werden, um eine noch raschere Verdampfung in den Verdampferschalen zu ermöglichen.

In vorteilhafter Weiterbildung dieser Ausführung sind mehrere Sätze von vertikal übereinander angeordneten Verdampferschalen vorgesehen, die von jeweils mindestens einem Heizkörper zusammengehalten sind, wobei zumindest der jeweils obersten Verdampferschale eines jeden Satzes Flüssigkeit von dem Flüssigkeitsbehälter zuführbar ist. Es können also beispielsweise zwei Sätze im Ofenraum vorgesehen sein, die links und rechts neben einem zentralen Lüfter vor der Rückwand des Ofens angeordnet sind.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: einen schematischen Vertikalschnitt eines Backofens;
- Fig. 2: einen Frontalschnitt durch den Backofen aus Fig. 1 entlang der Linie II-II;
- Fig. 3: eine perspektivische Darstellung eines ersten Ausführungsbeispiels einer erfindungsgemäßen Anordnung von Verdampferschalen;
- Fig. 4: eine Draufsicht auf eine Verdampferschale nach einem zweiten Ausführungsbeispiel der Erfindung;
- Fig. 5: einen Vertikalschnitt durch die Verdampferschale aus Fig. 4 entlang der Linie V-V;
- Fig. 6: eine Ansicht einer erfindungsgemäßen Verdampfungsvorrichtung mit den in den Fig. 4 und 5 gezeigten Verdampferschalen;
- Fig. 7: eine perspektivische Darstellung eines dritten Ausführungsbeispiels einer erfindungsgemäßen Anordnung von Verdampferschalen;
- Fig. 8: eine perspektivische Darstellung eines vierten Ausführungsbeispiels einer erfindungsgemäßen Anordnung von Verdampferschalen;
- Fig. 9: einen schematischen Frontalschnitt eines erfindungsgemäßen Ofens, in dem die Zuführung von Flüssigkeit zu zwei Dampferzeugungseinrichtungen dargestellt ist.

In der Zeichnung sind gleiche oder einander entsprechende Teile mit denselben Bezugszeichen gekennzeichnet.

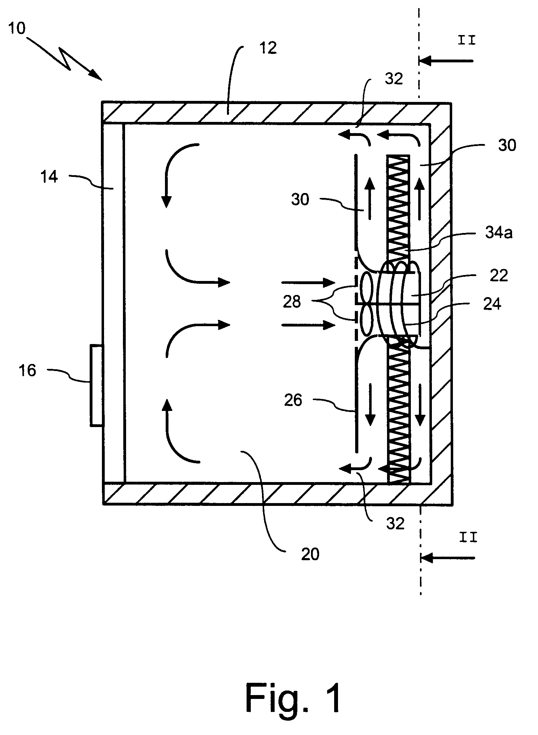

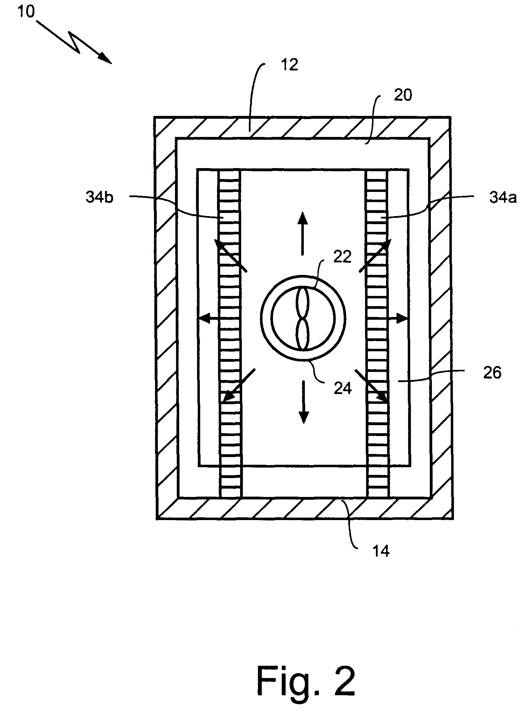

In Fig. 1 und Fig. 2 ist ein Backofen schematisch in einem Vertikalschnitt bzw. in einem Frontalschnitt entlang der Linie II-II gezeigt und insgesamt mit der Ziffer 10 bezeichnet. Der Backofen 10 hat ein Gehäuse 12 und ist an seiner Vorderseite mit einer Tür 14 zum Be- und Entladen des Backguts (nicht dargestellt) versehen.

Gegenüber der Tür 14, d.h. an der Rückseite des Backofens 10, befindet sich ein Radiallüfter 22 und eine Ofenheizung 24, die vom Backraum 20 durch eine Ofenrückwand 26 getrennt sind. Der Radiallüfter 22 saugt über Öffnungen 28 in der Ofenrückwand 26 Luft aus dem Backraum 20 an und bläst sie radial nach außen in den von der Ofenrückwand 26 und der Rückseite des Gehäuse 12 gebildeten Zwischenraum 30. Zwischen der Ofenrückwand 26 und dem Gehäuse 12 verläuft ein umlaufender Spalt 32, durch den hindurch die radial nach außen geblasene Luft wieder zurück in den Backraum 20 gelangt. Dadurch kommt es zu einer zikulierenden Luftbewegung in der durch die Pfeile in Fig. 1 angedeuteten Richtung.

Die Ofenheizung 24 ist als Heizschlange ausgeführt, die spiralförmig um den Radiallüfter 22 herumgeführt ist. Die im Ofen 10 umgewälzte Luft hat deswegen im Zwischenraum 30 ihre höchste Temperatur.

Wie in Fig. 2 gut erkennbar, ist zu beiden Seiten des Radiallüfters 22 entlang der Ofenrückwand 26 jeweils eine Dampferzeugungseinrichtung 34a und 34b angeordnet, deren Einzelheiten nachfolgend näher erläutert werden. Der dort erzeugte Dampf wird vom Luftstrom mitgenommen und gelangt durch den umlaufenden Spalt 32 hindurch in den Backraum 20.

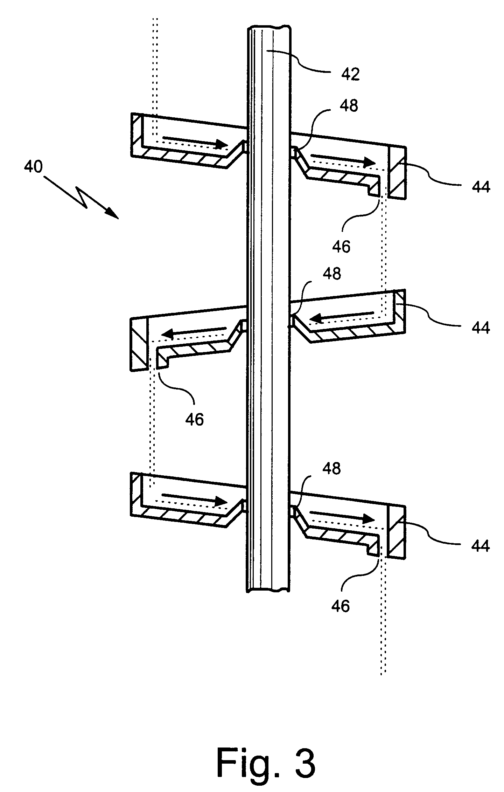

Fig. 3 zeigt ein erstes Ausführungsbeispiel einer erfindungs-gemäßen Dampferzeugungseinrichtung. Die Dampferzeugungseinrichtung 40 weist einen Heizkörper 42 auf, der als elektrisch beheizbares Heizrohr ausgeführt ist. Das Heizrohr 42 ist als Widerstandsheizstab bekannter Bauart ausgebildet.

Der Heizkörper 42 durchsetzt annähernd zentral drei Verdampferschalen 44. Die Verdampferschalen 44 sind abwechselnd zu gegenüberliegenden Seiten hin geneigt angeordnet. Aufgrund dieser Neigung fließt von oben eingefüllte Flüssigkeit in der durch die Pfeile angedeuteten Richtung von einer Verdampferschale in die darunterliegende. Die Verdampferschalen 44 sind an ihrer Unterseite mit Auslässen 46 vorgesehen, die im wesentlichen als Schlitz in der Bodenfläche der Verdampferschalen ausgeführt sind. Der Schlitz ist so weit vom Rand der Verdampferschalen entfernt, daß herunterfließende Flüssigkeit vollständig von der darunterliegenden Verdampferschale aufgenommen werden kann.

Die Verdampferschalen 44 sind jeweils mit einer Öffnung 48 versehen, durch die der Heizkörper 42 hindurchgeführt ist. Bei dem dargestellten Ausführungsbeispiel berührt der Heizkörper 42 die Verdampferschalen 44 nicht. Dieses Spiel zwischen dem Heizkörper 42 und den Verdampferschalen 44 erleichtert den Zusammenbau der Dampferzeugungseinrichtung 40. Um die Öffnungen 48 herum wölben sich jeweils die Bodenflächen der Verdampferschalen 44 nach oben. Dadurch wird verhindert, daß Flüssigkeit in den Verdampferschalen aus den Öffnungen 48 hinausläuft und dabei in Kontakt mit dem Heizkörper 42 gerät. Der Weg der Flüssigkeit ist auf diese Weise eindeutig festgelegt.

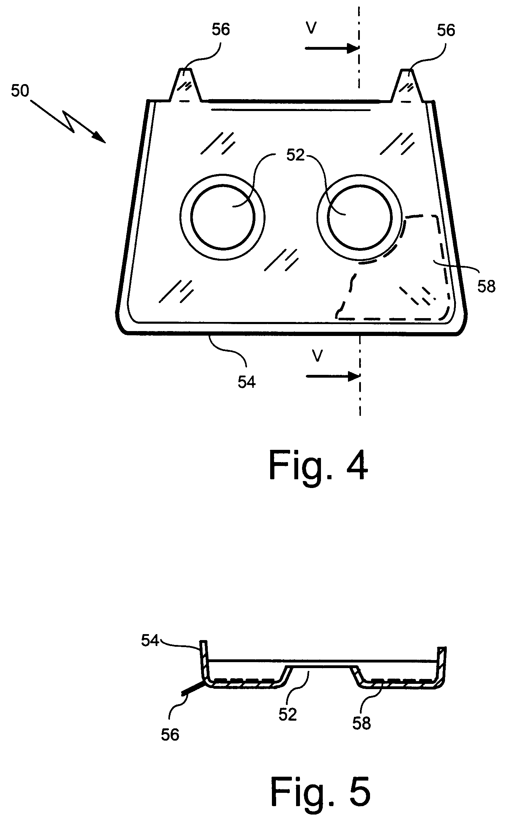

Die Fig. 4 und 5 zeigen eine Verdampferschale 50 gemäß einer anderen Ausführung der Erfindung in einer Draufsicht bzw. in einem Vertikalschnitt entlang der Linie V-V. Die Verdampferschale 50 weist einen trapezförmige Bodenfläche mit zwei nebeneinander angeordnete Öffnungen 52 auf, die im eingebauten Zustand jeweils von einem Heizkörper durchsetzt werden. Um die Öffnungen 48 herum wölbt sich, ähnlich wie bei dem in Fig. 3 gezeigten Ausführungsbeispiel, die Bodenfläche nach oben, was in Fig. 5 besonders gut zu erkennen ist. Die Verdampferschale 50 ist von einem umlaufenden Rand 54 eingefaßt, der lediglich im Bereich zweier nach unten leicht abgewinkelter Stege 56 unterbrochen ist.

Die Verdampferschale 50 ist einstückig als Tiefziehteil aus Edelstahl gefertigt und besitzt eine hohe Wärmekapazität. Die hohe Wärmekapazität trägt, zusammen mit der gegenüber der Luft erhöhten Temperatur, dazu bei, daß infolge der großen gespeicherten Wärmemenge auch größere Mengen von Flüssigkeit ohne Nachheizen verdampft werden können.

Um die Wärmekapazität und damit die in kurzer Zeit erzeugbare Dampfmenge weiter zu vergrößern, kann wahlweise in die Verdampferschale 50 eine ebene Platte eingelegt sein, wie gestrichelt mit 58 angedeutet ist, die ebenso wie die Bodenfläche der Verdampferschale 50 trapezförmig ist und zwei Öffnungen aufweist. Die eingelegbare Platte 58 liegt plan auf der Bodenfläche der Verdampferschale 50 auf und bedeckt diese vollständig, so daß ein guter Wärmeübergang zwischen der Verdampferschale 50 und der Platte 58 gewährleistet ist. Im dargestellten Ausführungsbeispiel ist die Platte 58 als gestanztes Blechteil ausgeführt.

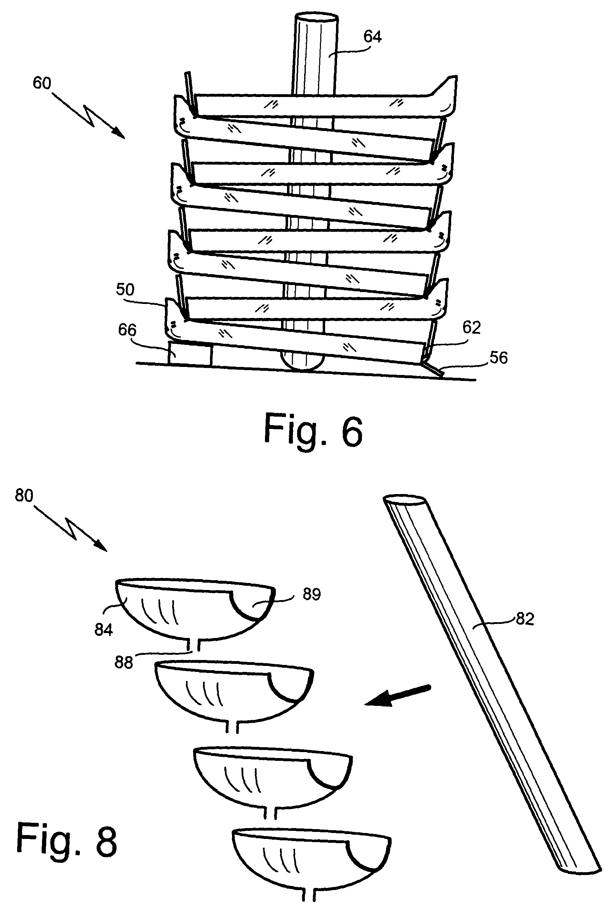

Fig. 6 zeigt in einer Ansicht eine Dampferzeugungseinrichtung 60, bei der mehrere der in den Fig. 4 und Fig. 5 dargestellten Verdampferschalen 50 übereinander gestapelt sind. Dabei liegt jeweils der Boden einer Verdampferschale auf der einen Seite auf dem Rand 54 der darunter angeordneten Verdampferschale auf. Auf der gegenüberliegenden Seite stützen sich die Verdampferschalen jeweils mit ihren Stegen 56 auf der Innenseite der darunter angeordneten Verdampferschale ab. Die Unterbrechung des umlaufenden Randes 54 zwischen den Stegen 56 bildet Auslässe 62, durch die hindurch eingefüllte Flüssigkeit von einer Verdampferschale in die darunter angeordnete Verdampferschale fließen kann.

Durch die Öffnungen 52 in den Verdampferschalen 50 verläuft ein als Heizrohr ausgeführter Heizkörper 64. Die unterste Verdampferschale 50 stützt sich auf einer Seite auf einem Bock 66 ab, der beispielsweise auf dem Boden des Ofens befestigt sein kann. Die Neigung der Bodenflächen der Verdampferschalen 50 beträgt im dargestellten Ausführungsbeispiel konstant 3° und liegt vorzugsweise im Bereich zwischen etwa 1° und etwa 10°.

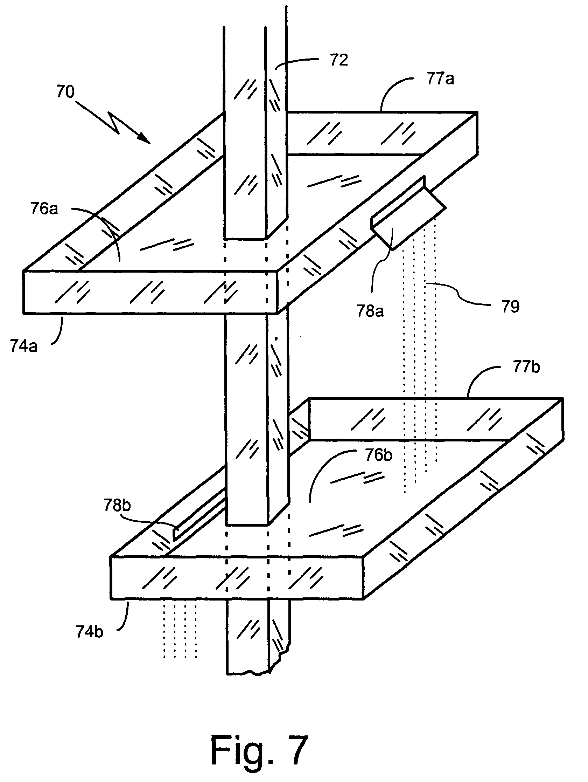

Fig. 7 zeigt einen Ausschnitt aus einem anderen Ausführungsbeispiel für eine erfindungsgemäße Dampferzeugungseinrichtung 70 in einer perspektivischen Darstellung. In vertikaler Richtung erstreckt sich ein Heizkörper 72, der zwei Verdampferschalen 74a, 74b vollständig durchsetzt. Der Heizkörper 72 ist hier als Widerstandsheizstab mit rechteckigem Querschnitt ausgeführt. Die Verdampferschalen 74a, 74b bestehen aus Weißblech und sind mit dem Profilrohr hartverlötet, so daß das Profilrohr gleichzeitig als Träger für die Verdampferschalen 74a, 74b dient. Um die ebene Bodenfläche 76a, 76b der Verdampferschalen 74a, 74b herum verläuft eine Umrandung 77a, 77b, die jeweils mit einem Auslaß 78a, 78b versehen ist. Durch den Abstand der Auslässe 78a und 78b von der Bodenfläche 76a bzw. 76b ist die maximale Höhe eines Flüssigkeitsspiegels in den Verdampferschalen 74a, 74b festgelegt.

Wird die obere Verdampferschale 74a nach und nach mit Flüssigkeit gefüllt, so steigt zunächst der Flüssigkeitsstand, bis schließlich Flüssigkeit 79 aus dem Auslaß 78a der Verdampferschale 74a herausläuft und in die darunter angeordnete Verdampferschale 74b fließt. Wird weiter Flüssigkeit in die obere Verdampferschale 74a gefüllt, so hebt sich der Flüssigkeitsspiegel in der Verdampferschale 74b so lange, bis auch dort die Flüssigkeit aus deren Auslaß 78b herausfließt. Auf diese Weise wird erreicht, daß sich von oben nach unten sukzessive in sämtlichen übereinander angeordneten Verdampferschalen ein definierter Flüssigkeitsspiegel einstellt. Aufgrund der von dem Heizkörper 28 erzeugten Wärme verdampft die Flüssigkeit in den Verdampferschalen 74a und 74b sehr rasch.

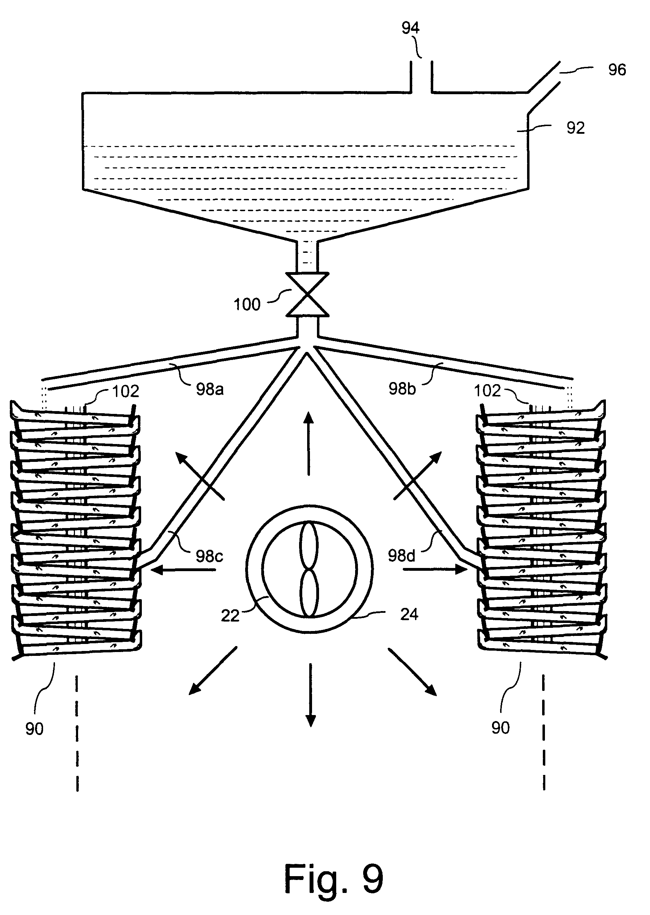

In Fig. 8 ist in einer perspektivischen Darstellung eine weitere Variante für eine Dampferzeugungseinrichtung gemäß der Erfindung gezeigt. Bei der dargestellten Dampferzeugungseinrichtung 80 sind entlang eines rohrförmigen Heizkörpers 82 Verdampferschalen 84 untereinander zueinander versetzt angeordnet. Die Verdampferschalen 84 haben eine konkav gewölbte Bodenfläche, die an ihrem tiefsten Punkt jeweils mit einem Auslaß 88 versehen ist. Der Heizkörper 82 durchsetzt die Verdampferschalen 84 bei diesem Ausführungsbeispiel nicht vollständig, sondern nur teilweise. Anstelle einer Öffnung weisen die Verdampferschalen 84 jeweils Ausnehmungen 89 auf. An diese Ausnehmungen wird bei der Montage, wie durch den Pfeil in Fig. 6 angedeutet, der Heizkörper 82 seitlich angesetzt, wobei zur Befestigung ein Hochtemperatur-Klebstoff verwendet wird.

Ähnlich wie bei dem in Fig. 7 dargestellten Ausführungsbeispiel dient somit auch hier der Heizkörper 82 als Träger für die Verdampferschalen, so daß auf ein zusätzliches Gerüst zum Tragen der Verdampferschalen 84 verzichtet werden kann. Da die Verdampferschalen 84 seitlich leicht versetzt zueinander angeordnet sind, ist stets gewährleistet, daß herablaufende Flüssigkeit zumindest einen Teil der Bodenfläche der Verdampferschalen 84 benetzt.

Fig. 9 zeigt in einer der Fig. 2 teilweise entsprechenden schematischen Darstellung eine Vorrichtung zur Versorgung zweier Dampferzeugungseinrichtungen 90 mit Flüssigkeit. Wie in Fig. 2 sind auch hier die Dampferzeugungseinrichtungen 90 zu beiden Seiten des Radiallüfters 22 in dem von der Ofenrückwand 26 und der Rückseite des Gehäuses 12 gebildeten Zwischenraum 30 angeordnet.

Darüber befindet sich ein Flüssigkeitsbehälter 92, der an seiner Oberseite einen Entlüfterstutzen 94 und einen Nachfüllstutzen 96 aufweist. Vier Zuführarme 98a, 98b, 98c und 98d sind über ein elektrisch steuerbares Magnetventil 100 mit der Unterseite des Flüssigkeitsbehälters 92 verbunden. Durch Betätigen des Magnetventils 100 kann Flüssigkeit aus dem Flüssigkeitsbehälter 92 über die Zuführarme 98a, 98b, 98c und 98d zu den Dampferzeugungseinrichtungen 90 geführt werden. Die Zuführarme 98a, 98b, 98c und 98d sind als Schläuche ausgeführt, die an einem Verteilerstück unterhalb des Magnetventils 100 angesetzt sind.

Die beiden Zuführarme 98a und 98b sind jeweils über den obersten Verdampferschalen der Dampferzeugungseinrichtungen 90 befestigt. Die beiden anderen Zuführarme 98c und 98d sind jeweils zu tiefer angeordneten Verdampferschalen geführt und dort befestigt. Je mehr Zuführarme vorgesehen sind, desto mehr Flüssigkeit kann in kurzer Zeit den Dampferzeugungseinrichtungen 90 zugeführt werden. Falls von allen Zuführarmen pro Zeiteinheit die gleiche Flüssigkeitsmenge abgegeben werden soll, so können die Zuführarme einen um so kleineren Querschnitt haben, je tiefer sie nach unten reichen. Dadurch wird dem höheren hydrostatischen Druck Rechnung getragen, der an den Enden der tiefer reichenden Zuführarme herrscht.

Durch Betätigen des Magnetventils 100 kann eine gut dosierbare Flüssigkeitsmenge den Dampferzeugungseinrichtungen 90 zugeführt werden. Die Flüssigkeit läuft dann kaskadenartig die Verdampferschalen der Dampferzeugungseinrichtungen herab und verdampft dabei aufgrund der von den Heizkörpern 102 erzeugten Wärme. Vorzugsweise sind die Anzahl und die Dimensionierung der Verdampferschalen sowie die Heizleistung und Anordnung der Heizkörper 102 so gewählt, daß einerseits sämtliche Verdampferschalen zur Dampferzeugung beitragen, d.h. zumindest zeitweise mit Flüssigkeit gefüllt oder benetzt sind, und andererseits keine Flüssigkeit unverdampft zurückbleibt bzw. auf dem Boden des Ofenraums ausläuft.

Als zu verdampfende Flüssigkeit kommt insbesondere Wasser in Betracht. Es ist jedoch auch möglich, dem Wasser Geschmacks-, Duft- oder Farbstoffe zuzufügen.

Die Anordnung der gezeigten Baugruppen innerhalb des Ofens ist in weiten Grenzen abwandelbar. So können anstelle der zwei gezeigten Dampferzeugungseinrichtungen 90 eine oder auch mehr als zwei Dampferzeugungseinrichtungen vorgesehen sein. Außerdem müssen diese natürlich nicht im Backofen an dem in Fig. 9 gezeigten Ort angeordnet sein. Schließlich ist auch möglich, anstelle von nur einem oder von zwei Heizkörpern die Verdampferschalen von einer Vielzahl von Heizkörpern, z.B. von dünnen Heizdrähten, durchsetzen zu lassen, um den Wärmeübergang weiter zu verbessern.

Die Erfindung ist vorstehend am Beispiel eines Backofens erläutert worden. Es versteht sich, daß die obigen Ausführungen mit den entsprechenden Änderungen auch für andere Arten von Öfen gelten.

## Patentansprüche

1. Ofen, insbesondere Backofen (10), mit einer Dampferzeugungseinrichtung (34a 34b, 40, 60, 70, 80, 90), die übereinander angeordnete Verdampferschalen (44, 50, 74a, 74b, 84) zur Aufnahme von zu verdampfender Flüssigkeit (79) aufweist, dadurch gekennzeichnet, daß die Verdampferschalen (44, 50, 74a, 74b, 84) wenigstens teilweise von einem Heizkörper (42, 64, 72, 82, 102) durchsetzt sind.

2. Ofen nach Anspruch 1, dadurch gekennzeichnet, daß die Verdampferschalen (44, 50, 74a, 74b, 84) jeweils mit wenigstens einer Öffnung (48, 52) versehen sind, durch die der Heizkörper (42, 64, 72, 102) hindurchgeführt ist.

3. Ofen nach einem der Ansprüche 1 oder 2, dadurch gekennzeichnet, daß der Heizkörper (42, 64, 82, 102) ein elektrisch beheizbares Heizrohr ist.

4. Ofen nach einem der vorhergehenden Ansprüche, dadurch gekennzeichnet, daß der Heizkörper (42, 64, 72, 82, 102) unabhängig von einer Ofenheizung (24) erwärmbar ist.

5. Ofen nach einem der vorhergehenden Ansprüche, dadurch gekennzeichnet, daß der Heizkörper (72, 82) die Verdampferschalen (84, 74a, 74b) zur Schaffung eines unmittelbaren Wärmeübergangs berührt.

6. Ofen nach einem der vorhergehenden Ansprüche, dadurch gekennzeichnet, daß die Verdampferschalen (44, 50, 74a, 74b, 84) so zueinander angeordnet sind, daß bei Überschreiten eines Flüssigkeitsstandes in einer Verdampferschale Flüssigkeit durch den Einfluß der Schwerkraft in eine darunter angeordnete Verdampferschale fließt.

7. Ofen nach Anspruch 6, dadurch gekennzeichnet, daß die Verdampferschalen (44, 50, 74a, 74b, 84) jeweils mit wenigstens einem Auslaß (46, 62, 78a, 78b, 88) zum Ablaufen von Flüssigkeit (79) in eine darunter angeordnete Verdampferschale versehen sind.

8. Ofen nach einem der Ansprüche 6 oder 7, dadurch gekennzeichnet, daß die Verdampferschalen (44, 50) ebene Bodenflächen haben und so geneigt angeordnet sind, daß durch die Neigung der Bodenflächen eine Fließrichtung festgelegt ist.

9. Ofen nach Anspruch 8, dadurch gekennzeichnet, daß die Neigung der Bodenflächen zwischen etwa 1° und etwa 10° beträgt.

10. Ofen nach einem der Ansprüche 8 oder 9, dadurch gekennzeichnet, daß die Verdampferschalen (44, 50) abwechselnd zu gegenüberliegenden Seiten hin geneigt angeordnet sind.

11. Ofen nach Anspruch 10, dadurch gekennzeichnet, daß die Verdampferschalen (50) abwechselnd um jeweils 180° um ihre Vertikalachse verdreht übereinander stapelbar sind.

12. Ofen nach Anspruch 11, dadurch gekennzeichnet, daß die Verdampferschalen eine etwa trapezförmige, von einem umlaufenden Rand (54) eingefaßte Bodenfläche (50) aufweisen, wobei an wenigstens zwei Stellen entlang der kürzeren Parallelseite des Trapezes der Rand unterbrochen (62) und dort jeweils mit einem nach unten weisenden Steg (56) versehen ist.

13. Ofen nach einem der vorhergehenden Ansprüche, dadurch gekennzeichnet, daß in die Verdampferschalen (50) zur Erhöhung der Wärmekapazität Metallteile eingelegt sind, deren Form an die Form der Verdampferschalen (50) angepaßt ist.

14. Ofen nach einem der vorhergehenden Ansprüche, dadurch gekennzeichnet, daß auf einem Niveau oberhalb der obersten Verdampferschale ein Flüssigkeitsbehälter (92) angeordnet ist, aus dem zumindest der obersten Verdampferschale Flüssigkeit gezielt zuführbar ist.

15. Ofen nach Anspruch 14 mit mehreren Sätzen (90) von vertikal übereinander angeordneten Verdampferschalen, die von jeweils mindestens einem Heizkörper zusammengehalten sind, dadurch gekennzeichnet, daß zumindest der jeweils obersten Verdampferschale eines jeden Satzes Flüssigkeit von dem Flüssigkeitsbehälter (92) zuführbar ist.
